## Europäisches Patentamt

## European Patent Office

## Office européen des brevets

(11) Veröffentlichungsnummer: **0 126 806**
**B1**

(12)

# EUROPÄISCHE PATENTSCHRIFT

(45) Veröffentlichungstag der Patentschrift:
27.04.88

(51) Int. Cl.⁴: **G 11 B 5/127**, G 11 B 5/187

(21) Anmeldenummer: **83112520.8**

(22) Anmeldetag: **13.12.83**

(54) **Magnetkopf.**

(30) Priorität: **28.05.83 DE 3319437**

(43) Veröffentlichungstag der Anmeldung:
**05.12.84 Patentblatt 84/49**

(45) Bekanntmachung des Hinweises auf die Patenterteilung:
**27.04.88 Patentblatt 88/17**

(84) Benannte Vertragsstaaten:
**AT BE CH DE FR GB IT LI**

(56) Entgegenhaltungen:
**EP-A-0 081 239**
**DE-A-2 733 304**
**FR-A-2 520 540**
**US-A-4 160 315**
**US-A-4 279 633**

**Patent Abstracts of Japan Band 1, Nr. 142, 18. November 1977 Seite 6951E77**
**Patent Abstracts of Japan Band 2, Nr. 94, 5. August 1978 Seite 4426E78**
**Patent Abstracts of Japan Band 3, Nr. 71, 20. Juni 1979 Seite 156E118**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Mangold, Hans, Bussardstrasse 18, D-8510 Fuerth/Bay (DE)**
Erfinder: **Kotter, Karl- Heinz, Ackerstrasse 10, D-8502 Zirndorf- Weiherhof (DE)**
Erfinder: **Uhde, Dietmar, Eibenstrasse 9, D-8502 Zirndorf- Weiherhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Magnetkopf für Aufzeichnungs- und/oder Wiedergabegeräte mit zwei weichmagnetischen Kernhälften aus amorphem Metall, einem unmagnetischen Arbeitsspalt zwischen den beiden Kernhälften, Kernträgern beiderseits der Kernhälften, Spulenwindungen um mindestens eine der mit Kernträgern versehen Kernhälften, wobei die aneinanderliegenden Seiten der Kernhälften gegenüber ihren Kernträgern um eine vorbestimmte Höhe überstehen, derart, daß Zwischenräume zwischen den Kernträgern entstehen.

Bei Videomagnetbandgeräten der Unterhaltungselektronik werden Magnetköpfe mit kleinen Spurbreiten und extrem kleinen Spaltbreiten in großer Stückzahl eingesetzt. So beträgt beispielsweise bei Magnetköpfen für Videorecorder des Systems Video 2000 die Spurbreite nur 22,5 µm und die Spaltbreite nur wenige Zehntel Mikrometer (µm). Dies hat zur Folge, daß das Volumen eines derartigen Kopfes sehr klein ist und nur wenige Zehntel Kubikmillimeter beträgt. Das Hauptproblem der Herstellung eines derart kleinen Magnetkopfes in großen Serien besteht daher darin, dem mit einem Arbeitsspalt versehenen Ringkern eine ausreichende mechanische Stabilität und verschleißmäßige Lebensdauer zu geben. Bei Video-Magnetköpfen mit Ferritkern wird die mechanische Stabilität beispielsweise gemäß US-A-3 813 693 dadurch erreicht, daß die Kernpole an den Spaltenden mit Glasmaterial abgestützt werden. Dieses Verfahren hat jedoch den Nachteil, daß die Glasverlötung eine sehr hohe Temperatur mit einer sorgfältig überwachten Glühatmosphäre bedingt. Gläser oder Glaslote erzeugen Vorspannungen in den Kernpolen und sind in der Regel aggressiv gegenüber dem Kernwerkstoff. Ersteres bedeutet eine Verschlechterung des Wirkungsgrades, letzteres eine undefinierte Vergrößerung des Arbeitsspaltes.

Mit der DE-A-2 642 643 wurde ein Weg zur Herstellung eines Magnetkopfes mit geringer Spurbreite bekannt, dessen mechanische Stabilität durch einen einseitigen Tragkörper erreicht wird, wobei der Magnetkern aus Ferrit besteht. Diese Anordnung ist technologisch sehr aufwendig und für große Serien ungeeignet.

Aus den Patent Abstracts of Japan, Band 3, Nr. 71, 20. Juni 1979, Seite 156 E 118 & JP-A-54-51506 ist ein Magnetkopf bekannt, bei dem die Kernhälften gegenüber beidseitig angeordneten Kernträgern im Spaltbereich um einen bestimmten Betrag überstehen. Nachteilig ist hierbei, daß bei Verwendung von amorphmetallischen Kernhälften mit geringer Materialdicke die Stabilität des Magnetkopfes nicht ausreichend ist.

Der Erfindung liegt die Aufgabe zugrunde, einen Magnetkopf mit amorphmetallischen Kernhälften sowie kleiner Spurbreite und extrem kleiner Spaltbreite zu schaffen, bei dem alle Kopfteile durch einen Bindekörper vorspannungsfrei zusammengehalten werden.

Diese Aufgabe wird erfindungsgemäß durch die kennzeichnenden Merkmale des Patentanspruchs 1 gelöst. Der Bindekörper kann aus einem bei niedriger Temperatur (< 250° C) aushärtenden Siliconharz oder Siliconharz-Mischprodukt bestehen, wobei zur verschleißmäßigen Angleichung bedarfsweise ein Füllmittel beigegeben wird.

Die Kernträger 5a, 5b, 6a, 6b können aus Glas, Keramik oder einem gleichartigen Material bestehen. Ihr Zusammenhalt mit den Kernhälften wird durch Verbindungsschichten 2a, 2b, 3a, 3b aus niedrigschmelzendem Glas (Erweichungspunkt < 400° C) bewirkt. Die einzelnen Teile können so gewählt werden, daß der Erweichungspunkt der Verbindungsschichten unter dem Kristallisationspunkt der Kernhälften 1a, 1b und über der Aushärtungstemperatur des Bindekörpers liegt.

Das Überstehen der Kernhälften gegenüber ihren Trägern kann wahlweise durch Ätzen, Schleifen oder Läppen erreicht werden.

Der Magnetkopf gemäß dem Patentanspruch 1 ist ein in großen Serien herstellbarer, mechanisch stabiler, abriebfester Magnetkopf mit optimalem Wirkungsgrad.

Einzelheiten der Erfindung werden im folgenden anhand der Zeichnungen erläutert. Es zeigen:

Fig. 1 einen Magnetkopf zur Aufzeichnung und/oder Wiedergabe schmaler Spuren,

Fig. 2 eine Kopfspiegel-Draufsicht,

Fig. 3 einen zwischenbearbeiteten Halbblock,

Fig. 4 zwei endbearbeitete Halbblöcke und

Fig. 5 einen Gesamtblock vor der Endbearbeitung.

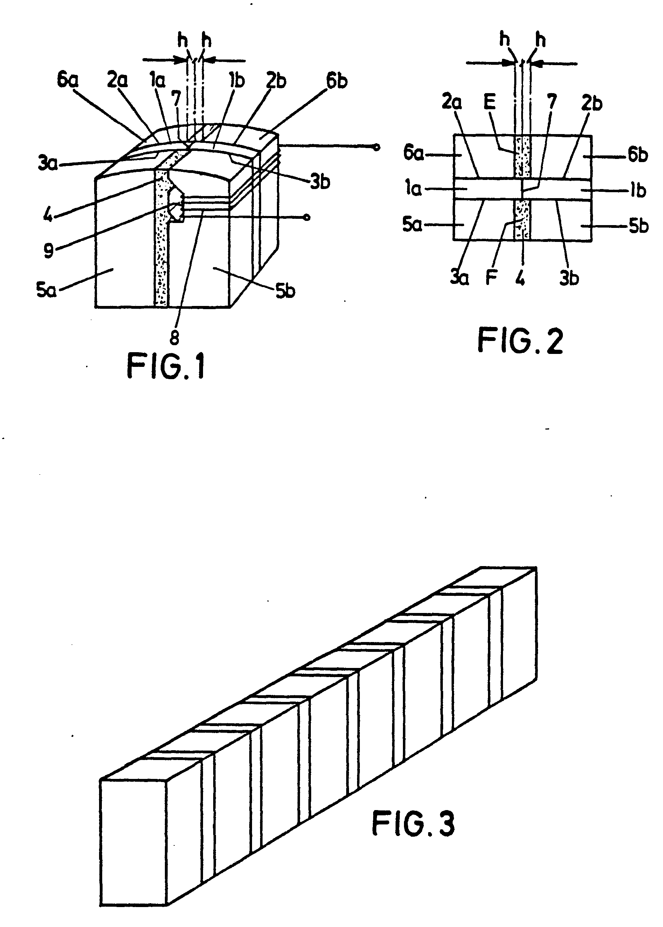

Fig. 1 zeigt einen Magnetkopf mit dem erfindungsgemäßen Aufbau. Die beiden Kernhälften 1a, 1b aus amorphem weichmagnetischen Metall sind durch einen unmagnetischen Arbeitsspalt 7 getrennt. Sie sind durch Verbindungsschichten 2a, 2b, 3a, 3b mit den Kernträgern 5a, 5b, 6a, 6b verbunden. Der Zusammenhalt sämtlicher Kopfteile wird durch den Bindekörper 4 bewirkt. Eine Kernhälfte 1b ist in ihrem Freiraum 9 mit Spulenwindungen 8 versehen.

Die Kernhälften bestehen aus weichmagnetischem amorphen Metall, insbesondere auf Co-Basis. Werkstoffe dieser Art haben ausgezeichnete magnetische Werte ($\mu_a$, $H_c$, $B_s$) und eine extrem hohe Verschleißfestigkeit (HV $\approx$ 1000). Sie sind mechanisch härter als Ferrit oder Alfesil (Sendust). Amorphes Metall wird in Folienform geliefert, wobei die Foliendicke bereits der Dicke der Kernhälften entspricht, so daß eine Nacharbeit nicht erforderlich ist.

Die Kernträger 5a, 5b, 6a, 6b können aus Glas, Keramik oder einem ähnlich gearteten Werkstoff bestehen.

Fig. 2 zeigt die Kopfspiegel-Draufsicht des erfindungsgemäßen Magnetkopfes.

Die wichtigsten Verfahrensschritte werden an Fig. 3 bis Fig. 5 erläutert.

Zunächst werden unmagnetische Plättchen und amorphe Metallfolien bei Einbringen einer Glaszwischenschicht aufeinandergestapelt und wie in Fig. 3 dargestellt, durch Einwirkung von Druck und Temperatur auf die Glaszwischenschicht zu einem Halbblock zusammengelötet. Für das Einbringen der Glaszwischenschicht hat sich die Abziehbild-Technik besonders bewährt. Der Erweichungspunkt des verwendeten Glases liegt unter 400° C. Die als Spaltfläche vorgesehene Seite des Halbblocks wird auf optimale Oberflächenglätte geschliffen, geläppt und poliert. Jede zweite Blockhälfte wird mit einer Schleifnut als Freiraum für die Spulenwindungen versehen.

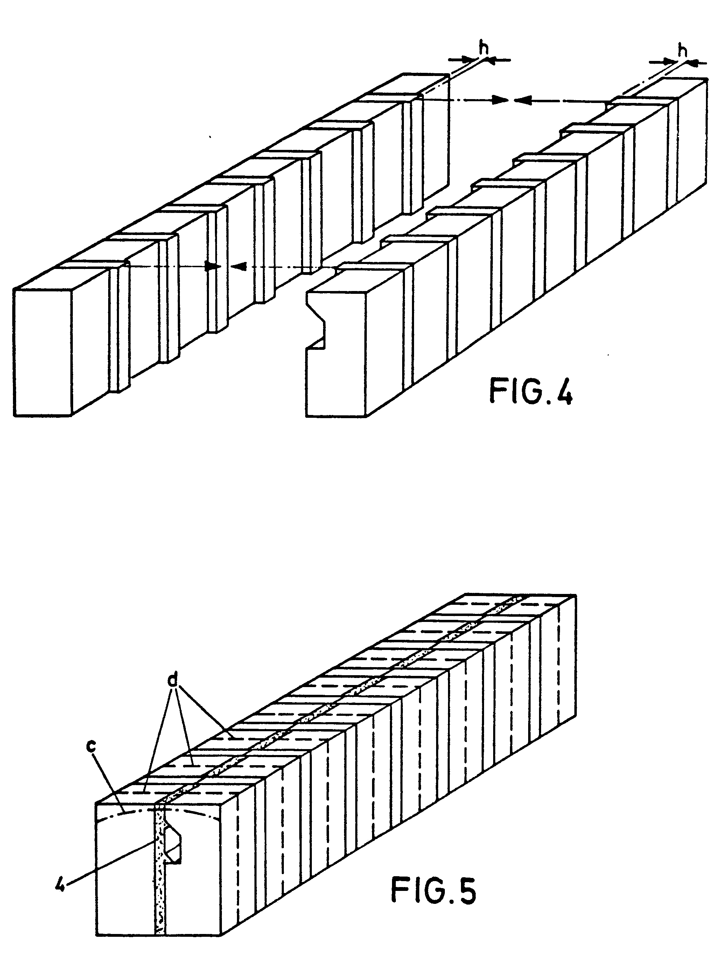

Gemäß einem weiteren Verfahrensschritt werden die als Spaltflächen vorgesehenen Flächen des Halbblocks (wie in Fig. 4 dargestellt) durch Ätzen, Schleifen oder Läppen derart bearbeitet, daß das amorphe Metall gegenüber den unmagnetischen Plättchen um die Höhe h übersteht. Zum Abätzen von Glasträgern hat sich eine Lösung mit 20 % Flußsäure besonders bewährt. In einem weiteren Verfahrensschritt wird das unmagnetische Arbeitsspaltmaterial in bekannter Weise, beispielsweise durch Aufdampfen, aufgebracht. Je zwei Halbblöcke werden sodann in einer Vorrichtung entsprechend den Pfeilrichtungen in Fig. 4 mit den bearbeiteten Flächen gegeneinander gedrückt und in diesem Zustand die Fugen mit dünnflüssigem Siliconharz bzw. einem Siliconharz-Mischprodukt gefüllt und durch Erhitzen zu einem Verbindungskörper ausgehärtet. Die Materialauswahl der Einzelteile ist dabei so getroffen, daß die Aushärtungstemperatur (< 250° C) unter dem Erweichungspunkt der Glaszwischenschicht liegt.

In Fig. 5 ist der Gesamtblock vor der Endbearbeitung dargestellt. Die Endbearbeitung, bestehend aus Schleifen, Läppen und Polieren, ist in Fig. 5 durch die Linie c angedeutet. Der Gesamtblock wird schließlich durch Zersägen entlang der angedeuteten Linien d in Einzelköpfe zerlegt, die abschließend mit Spulenwindungen 8 versehen werden.

Durch entsprechende Materialauswahl der Trägerteile läßt sich erreichen, daß die Kernhälften 1a, 1b nach der Endbearbeitung und auch später im Betrieb in der Bandkontaktfläche gegenüber den Trägerteilen 5a, 5b, 6a, 6b geringfügig überstehen, so daß ein optimaler Bandkontakt gewährleistet ist. Dies wird beispielsweise durch Verwendung von Bleiboratglas als Trägermaterial erreicht.

## Patentansprüche

1. Magnetkopf mit zwei weichmagnetischen Kernhälften (1a, 1b) aus amorphem Metall, einem unmagnetischen Arbeitsspalt zwischen den beiden Kernhälften, Kernträgern (5a, 5b, 6a, 6b) beiderseits der Kernhälften, Spulenwindungen (8) um mindestens eine der mit Kernträgern versehenen Kernhälften, wobei die aneinanderliegenden Seiten der Kernhälften (1a, 1b) gegenüber ihren Kernträgern (5a, 5b, 6a, 6b) um eine vorbestimmte Höhe (h) überstehen, derart, daß Zwischenräume zwischen den Kernträgern entstehen, dadurch gekennzeichnet, daß diese jeweils zwischen zwei unmagnetischen Kernträgern gebildeten Zwischenräume mit Bindekörper (4) gefüllt sind, die einen Teil (E, F) der Bandkontaktfläche bilden und alle Kopfteile vorspannungsfrei zusammenhalten.

2. Magnetkopf nach Anspruch 1, dadurch gekennzeichnet, daß die Kernträger (5a, 5b, 6a, 6b) aus Keramik oder Glas bestehen.

3. Magnetkopf nach Anspruch 1 oder 2, dadurch gekennzeichnet, daß Kernhälften (1a, 1b) und Kernträger (5a, 5b, 6a, 6b) durch Verbindungsschichten (2a, 2b, 3a, 3b) aus niedrigschmelzendem Glas, insbesondere mit einem Erweichungspunkt < 400° C, zusammengehalten werden.

4. Magnetkopf nach einem der Ansprüche 1 bis 3, dadurch gekennzeichnet, daß der Bindekörper (4) aus Siliconharz besteht.

5. Magnetkopf nach Anspruch 3, dadurch gekennzeichnet, daß der Erweichungspunkt der Verbindungsschichten (2a, 2b, 3a, 3b) unter dem Kristallisationspunkt der Kernhälften (1a, 1b) und über der Aushärtungstemperatur des Bindekörpers (4) liegt.

6. Magnetkopf nach einem der Ansprüche 1 bis 5, dadurch gekennzeichnet, daß die Kernhälften in der Bandkontaktzone gegenüber den Trägerteilen geringfügig überstehen.

## Claims

1. Magnetic head having two soft-magnetic amorphous-metal core halves (1a, 1b), a non-magnetic working gap between the two core halves, core carriers (5a, 5b, 6a, 6b) on both sides of the core halves, coil windings (8) around at least one of the core halves provided with core carriers, the sides of the core halves (1a, 1b) situated above each other projecting with respect to their core carriers (5a, 5b, 6a, 6b) by a predetermined height (h) in a manner such that gaps are produced between the core carriers, characterized in that said intermediate gaps formed in each case between two non-magnetic core carriers are filled with binding bodies (4) which form a part (E, F) of the tape contact face and hold all the head components together without any residual stress.

2. Magnetic head according to Claim 1, characterized in that the core carriers (5a, 5b, 6a, 6b) are composed of ceramic or glass.

3. Magnetic head according to Claim 1 or 2, characterized in that the core halves (1a, 1b) and core carriers (5a, 5b, 6a, 6b) are held together by bonding layers (2a, 2b, 3a, 3b) of low-melting glass, in particular, having a softening point of < 400°C.

4. Magnetic head according to one of the Claims 1 to 3, characterized in that the binding body (4) is composed of silicon resin.

5. Magnetic head according to Claim 3, characterized in that the softening point of the bonding layers (2a, 2b, 3a, 3b) is below the crystallization point of the core halves (1a, 1b) and above the curing temperature of the binding body (4).

6. Magnetic head according to one of the Claims 1 to 5, characterized in that the core halves project slightly with respect to the carrier components in the tape contact zone.

## Revendications

1. Tête magnétique comportant deux moitiés de noyau (1a, 1b) réalisées en un métal magnétique doux amorphe, une fente amagnétique de travail disposée entre les deux moitiés de noyau, des supports de noyau (5a, 5b, 6a, 6b) situés des deux côtés des moitiés de noyau, des enroulements de bobine (8) entourant au moins l'une des moitiés de noyau équipées des supports de noyau, les faces, situées en vis-à-vis, des moitiés de noyau (1a, 1b) faisant saillie, par rapport à leur support de noyau (5a, 5b, 6a, 6b), sur une hauteur prédéterminée (h) de telle sorte qu'il existe des espaces intercalaires entre les supports, caractérisée en ce que ces espaces intercalaires, formés respectivement entre deux supports de noyau amagnétiques sont remplis par des corps de liaison (4) qui forment une partie (E, F) de la surface de contact avec la bande et retiennent à l'état assemblé tous les éléments de la tête, sans aucune précontrainte.

2. Tête magnétique selon la revendication 1, caractérisée en ce que les supports de noyau (5a, 5b, 6a, 6b) sont constitués par une céramique ou par du verre.

3. Tête magnétique selon la revendication 1 ou 2, caractérisée en ce que les moitiés de noyau (1a, 1b) et les supports de noyau (5a, 5b, 6a, 6b) sont maintenus à l'état assemblé par des couches de liaison (2a, 2b, 3a, 3b) constituées par du verre possédant un bas point de fusion et notamment un point de ramollissement < 400°C.

4. Tête magnétique selon l'une des revendications 1 à 3, caractérisée en ce que le corps de liaison (4) est constitué par une résine au silicone.

5. Tête magnétique selon la revendication 3, caractérisée en ce que le point de ramollissement des couches de liaison (2a, 2b, 3a, 3b) est inférieur au point de cristallisation des moitiés de noyau (1a, 1b) et supérieur à la température de durcissement du corps de liaison (4).

6. Tête magnétique selon l'une des revendications 1 à 5, caractérisée en ce que les moitiés de noyau font légèrement saillie par rapport aux éléments de support, dans la zone de contact avec la bande.

FIG.1

FIG.2

FIG.3

FIG.4

FIG.5